# EUROPEAN PATENT SPECIFICATION

(11) **EP 1 451 664 B1**
(45) Date of publication and mention of the grant of the patent: **04.05.2005**
(21) Application number: 02803608.5
(22) Date of filing: 05.11.2002
(51) Int. Cl.: G06F 1/00

(54) **SYSTEMS, METHODS AND DEVICES FOR SECURE COMPUTING**
SYSTEME, VERFAHREN UND EINRICHTUNGEN ZUR SICHEREN DATENVERARBEITUNG
SYSTEMES, PROCEDES ET DISPOSITIFS POUR DES OPERATIONS INFORMATIQUES

(30) Priority: 06.11.2001 US 993450
(43) Date of publication of application: 01.09.2004
(73) Proprietor: Metacryption, LLC, Chicago, IL 60607 (US)
(72) Inventor: DI PIERRO, Massimo, Chicago, IL 60607 (US)
(74) Representative: Smith, Samuel Leonard
(86) International application number: PCT/US2002/035598
(87) International publication number: WO 2003/044643

(56) References cited:
- WO-A-00/59177
- US-A- 5 892 904
- US-A- 5 953 419
- US-A- 6 021 491
- US-A1- 2001 037 454
- US-A1- 2002 062 451

## Description

### BACKGROUND OF THE INVENTION

Ensuring the privacy and authenticity of data can be an important aspect of many computing endeavors. This is particularly true as distributed computing systems are developed, in which applications may be executing on one or more untrusted machines. It is also particularly true as the interaction between operating systems and applications has become more complex, allowing more opportunities to compromise the security of the environment in which sensitive data is operated upon.

Traditional privacy and authentication systems focus on protecting data communicated between an origin machine and a target machine, particularly along a public network. A standard email message, for example, may be relayed to multiple different and unknown servers before arriving at a destination machine. Any one of these unknown servers may serve as an obvious eavesdropping or data manipulating danger. Conventional encryption and authentication systems thus seek to protect information as it travels between machines of unknown trustworthiness. These methods make use of encryption generally handled by an operating system residing on a trustworthy machine. Encrypted and authenticated data generated by means of known security methods and sent by way of untrusted servers is far less subject to unauthorized appropriation or alteration than is the raw data itself.

Where sensitive data is to be used in an untrusted environment, conventional systems are limited in their effectiveness. For example, an application attempting to legitimately manipulate sensitive data is helpless against eavesdropping and adulteration, if the machine it is operating on is itself untrustworthy. Conventional techniques have been unable to solve such problems of inter-application security.

U.S. Patent No. 6,021,491 to Renaud teaches verification of data authenticity using a signature file having a digital signature that is checked using a signature verifying algorithm. This verification simply compares a data file identified with an identifier in the digital signature.

U.S. Patent No. 5,892,904 to Atkinson, et al. teaches a signing procedure where software code receives a signature to ensure authenticity and integrity of a file for a recipient of the code. The signing procedure forms a publisher signature using a hash of the file.

International Published Application WO 00/59177 teaches checking a digital signature of a file before communicating the file from a server. If the file has been tampered with, the digital signature will be invalid and the server will not send the file.

U.S. Patent Application 2001/0037454 teaches using a secure clock to generate a date and a cyclic redundancy code (CRC) algorithm to generate independent data for a file. If the file is later altered, the independent data in the file will change, and consequently not match the original independent data. If the independent data in the file matches the original independent data, the file can be verified.

U.S. Patent No. 5,953,419 to Lohstroh, et al. teaches use of a file decryption key to enable the secure distribution of files. The file decryption key is contained in a file and deciphered by a private key held only by a proper recipient of the file.

These approaches and other known techniques require a trusted environment or are otherwise limited in their applicability.

### BRIEF SUMMARY OF THE INVENTION

As defined in claim 1, one aspect of the invention relates to a method for securing, using and transferrring sensitive information, comprising the steps of: calculating a digital signature for a file; storing the digital signature within the file; encrypting the file including the digital signature; and performing a file input-output operation on a proper subset of the file, in a manner that permits such input-output operation without the need to decrypt the entire file.

As defined in claim 12, a further aspect of the invention relates to a machine readable medium comprising computer code, wherein the computer code further comprises: a first function for reading an encrypted file with an encrypted digital signature; and a second function for writing to an encrypted file with an encrypted digital signature; and wherein the first and second functions do not require decryption of the entier file.

An embodiment of the invention relates to a method for managing sensitive data, comprising: storing the sensitive data in an encrypted file with an encrypted digital signature and an encrypted user signature; and storing a temporary, encrypted copy of the file; decrypting a proper subset of the temporary, encrypted copy of the file in a function local to a trusted application when performing a read operation; decrypting a proper subset of the temporary, encrypted copy of the file in a function local to a trusted application when performing a write operation; updating the digital signature of the encrypted, temporary file, using the proper subset and a data subset to be written to the encrypted, temporary file; encrypting the data subset to be written to the temporary, encrypted file and writing said data subset to the temporary, encrypted file; and using the encrypted digital signature and encrypted user signature to authenticate the encrypted, temporary copy of the file; and updating the file with the encrypted, temporary copy of the file when performing a file close operation.Other embodiments of the invention will be apparent from the specification.

### BRIEF DESCRIPTION OF THE FIGURES

The invention is illustrated by way of example and not limitation in the accompanying drawings, in which like references indicate similar elements and in which:

Figure 1 is a data and process flow diagram showing a distributed computing system 100, in which embodiments of the present invention are envisioned to be useful.

Figure 2 shows a remote computing system 200 in which embodiments of the present invention are envisioned to be useful.

Figure 3 is a data flow diagram showing a system of users and a computers 300, in which embodiments of the present invention are envisioned to be useful.

Figure 4 is a logical flow diagram of an embodiment of the invention.

Figure 5 represents data flow when normal (unencrypted and unauthenticated) read, seek and write operations are carried out.

Figure 6 is a data flow diagram of an embodiment of the present invention.

Figure 7 is a logical flow diagram representing a file opening routine 700 of a preferred embodiment.

Figure 8 is a logical flow diagram illustrating a file close routine 800 of a preferred embodiment.

Figure 9 is a logical flow diagram illustrating a file read routine 900 of a preferred embodiment.

Figure 10 is a logical flow diagram illustrating a file write routine 1000 of a preferred embodiment.

Figure 11 is a logical flow diagram illustrating a file seek routine 1100 of a preferred embodiment.

Figure 12 is a logical flow diagram illustrating a file eof routine 1200 of a preferred embodiment.

Figure 13 illustrates a representative computing environment 1300, describing how a simple "Hello, world!" program may be written without the embodiments of the present invention.

Figure 14 illustrates a representative computing environment 1400. describing how a simple "Hello, world!" program may be modified to afford it the protections of an embodiment of the present invention.

### DETAILED DESCRIPTION OF THE INVENTION

Generally, systems, devices and methods for increasing the security and preserving the authenticity of sensitive data are described. In the following description, for purposes of explanation, numerous specific details are set forth in order to provide a thorough understanding of exemplary embodiments. It will be evident in certain instances, however, to one skilled in the art that the present invention can be practiced without these specific details.

For example, many of the embodiments of the present invention described herein will be written in common computing languages such as C. These are, however, merely exemplary embodiments presented in their specifics to elucidate the general principles of the invention. It will be clear from the teachings of the specification and knowledge in the art that many specific implementation details are not mandatory, and could be accomplished in any of a variety of ways.

This is particularly true with regard to single or small groups of source code operations. In computer programming, it is generally possible to accomplish any logical outcome in several different ways. For example, one can make the number 4 by adding 2 and 2, but also by multiplying 2 times 2, by adding 1 and 3, by dividing 10 by 2 and then subtracting 1 from the result, and so on. Embodiments of the invention could also be produced, for example, using other programming languages or other techniques in the same language..Sometimes, the variation between different embodiments of the invention will be a simple question of the efficiency or even personal taste.

In general, the embodiments of the invention provide several advantages that are useful when data security and authenticity are necessary. The embodiments of the invention are envisioned to be most useful where an application must read or write sensitive data to a file. A file here is used in its broadest sense as a data structure stored in a medium. It is not necessary that the ultimate medium storing the file be a hard disk or other conventional method for file storage, but rather could comprise internal computer memory, a communications network, paper, or any other media capable of receiving data for storage.

In cases where an application must read or write sensitive data from or to a file, the application is at risk of attack from within the machine the application is executing upon (hereinafter referred to as the "host machine"). "Sensitive data" means data that, for whatever reason, needs to be protected from theft or alteration. Such attacks may be attempts to copy, manipulate or otherwise compromise the sensitive data. An application is at risk any time the host machine is untrustworthy or has been compromised. This may occur when the application is sent to a remote (and uncontrolled) host machine to execute, for instance, when complex modeling programs are sent to supercomputing facilities to decrease execution time. This may also occur where a local, controlled host has been hacked, where the system administrator(s) is (are) unscrupulous, where a virus has infiltrated the system, or where security has been otherwise compromised.

Another situation in which an application may be at risk occurs when a computationally expensive program is to be broken into pieces to be processed by numerous computers. An example of such computing is a screen saver computation program, where a large application or an application analyzing a large body of data is spread over thousands of personal computers to be executed by screen saver programs that operate when the user is not otherwise employing the processor. Yet another situation such situation occurs when an application is storing data on a potentially insecure machine, whether or not the application itself is executing on a trusted machine or machines. As should be dear from the foregoing description, an application using sensitive data nearly always places that data at some level of risk

The embodiments of the present invention use a combination of encryption and authentication to achieve data security for applications operating in potentially insecure environments. In general, the embodiments of the invention allow a user to read from and write to an encrypted file without encrypting or decrypting more than small segments of that file, so that significant portions of the unencrypted file contents never have to be stored on the potentially insecure system-even in memory. This substantially reduces the risk posed by untrustworthy systems as an environment for the execution of application code that must use sensitive data.

The embodiments of the invention can provide several advantages to customary security and authentication schemes. Among these advantages are the encryption of data, a digital signature that allows data-authentication, a further (user) signature that allows distinction among encrypted files, protection against file adulteration or file mimicking, easy implementation of methods of producing encryption and authentication, incremental encryption and decryption (that is, the ability to alter or read one portion of a file without encrypting and decrypting the entire file), and the ability of data to remaining safe during system failure. It will be clear from the following description that not all of these advantages will be necessary or present in all embodiments, and that each advantage may vary in certain respects in any particular embodiment.

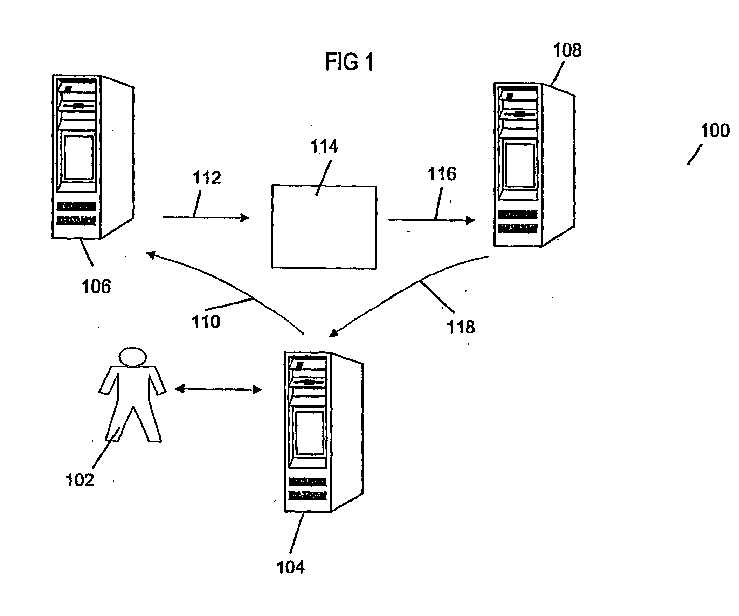

Figure 1 illustrates a situation where embodiments of the present invention can be of use. Figure one is a data and process flow diagram showing a distributed computing system 100. The term distributed computing system is used here to mean any system with a plurality of hosts, operating independently, but in direct or indirect communcation. Distributed computing system 100 has a user 102, a local (trusted) machine 104, a remote (untrusted) machine 106, remote (untrusted) machine 108, a step 110 representing transmission of an application and input data to distributed system, a step 112 representing input being transmitted to a user application, a step 114 representing execution of the user application on remote (untrusted) machine 106, a step 116 representing the transmission of the output of the user application to remote (untrusted) machine 108, and a step 118 representing transmission of the output to local (trusted) machine 104.

In Figure 1, user 102 desires an application to execute on a remote machine 106, which may be a supercomputer capable of decreasing the necessary processing time. User 102 causes the application and necessary input data to be transmitted to remote machine 106 in step 110. Remote machine 106 delivers the input data to the application in step 112, and the application executes in step 114. In step 116, the application delivers output data to remote machine 108, which in turn delivers the output to local machine 104 in step 118.

A file input-output operation, defined here as a read, write or seek-type operation, may require an application to access data in an unencrypted form, posing a data security risk even to a trusted application operating with an encrypted file system. During the process as shown in Figure 1, for example, data is potentially compromised in a number of ways. First, local machine 104, although believed trustworthy, may have been infiltrated. Second, the input data may have been captured or altered during step 110, or at remote machine 106 during steps 112 and 114. Third, output data may have been captured or altered during steps 116 or 118. Even if encrypted during transmission steps 116 and 118, data could still be captured by remote machine 106, if the application is required to operate on large chunks of unencrypted data, or use operating system routines to encrypt data for transmission. If the data is sensitive, some means should be used to guarantee the privacy and/or authenticity of the information at least at the system 100's weakest points.

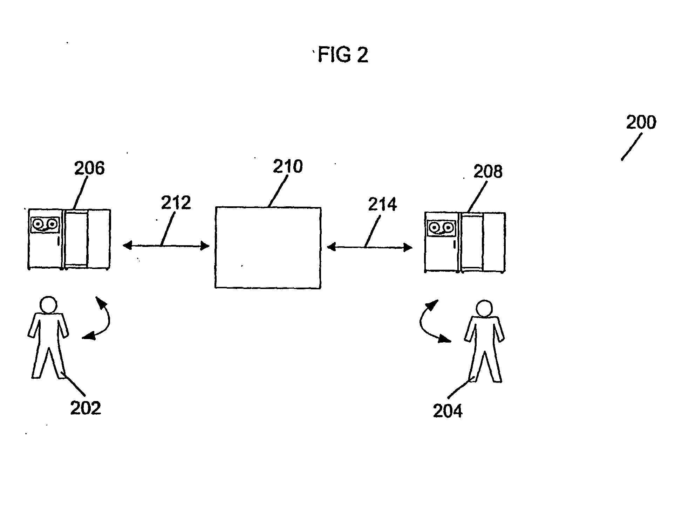

A second situation in which the invention is envisioned to be useful is illustrated in Figure 2. Figure 2 shows a remote computing system 200, having users 202 and 204, remote (untrusted) information systems 206 and 208, an application executing on a remote machine 210, and data exchange steps 212 and 214.

In Figure 2, computer users 202 and 204 access computing system 200 by using remote (untrusted) information systems 206 and 208. Users 202 and 204 wish to convey and/or receive information from application 210 by means of remote systems 206 and 208. Users 202 and 204, however, can not be certain that data passing over remote systems 206 or 208, or the system on which application 210 executes, will be safe from eavesdropping and/or adulteration.

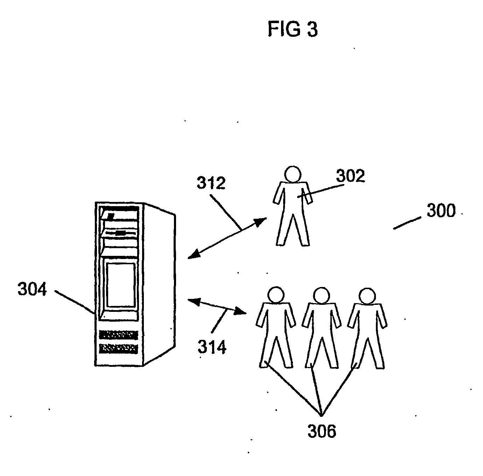

Figure 3 illustrates a third typical situation in which the present invention is envisioned as useful. Figure 3 is a data flow diagram showing a system of users and a computers 300, having a user 302, a local machine 304, untrusted agents 306, and data transfer steps 312 and 314. User 302 attempts to execute an application on local machine 304, and exchanges data with local machine 304 in step 312. Unbeknownst to user 302, local (and erstwhile trustworthy) machine 304 has been infiltrated by one or more untrusted agents 306, which may include a system administrator, another user of local machine 304, a hacker, a malfunctioning operating system, or a rogue application such as a virus. In this situation, user 302's data is insecure even in user 302's local machine 304, an environment most users presume to be safe.

One embodiment of the present invention involves the use of an encryption and authenticaiton scheme together with a file storage protocol. Such and embodiment allows the encrypted storage of data in such a way that it is possible to read from and write to the encrypted file without first decrypting the stored file. That means that applications operating on untrusted systems can read and manipulate encrypted files without keeping a copy of the unencrypted file in memory or transmitting it along an untrusted communications channel.

One embodiment of the invention uses an algorithm to generate a digital signature for authentication, stores that digital signature in the file header or otherwise with the file, and then encrypts the digital signature together with the data in the file. The digital signature is generated and updated in such a way that secure read and write operations can take place without decrypting the entire file. This renders the data in the file significantly safer than with standard encryption and authentication methods.

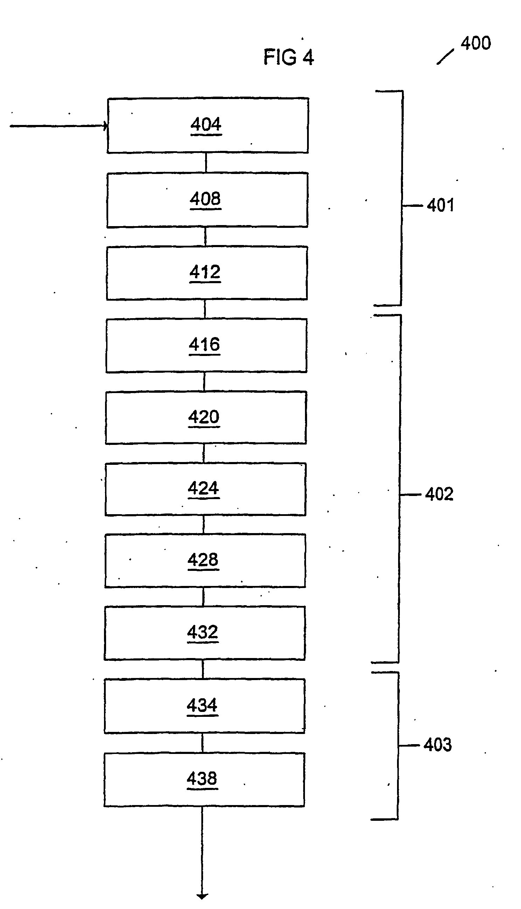

Figure 4 is a logical flow diagram of an embodiment of the invention. Figure 4 shows a process for securing data files for use by an application on an untrusted machine 400. Process 400 comprises a step 401 representing the creation of a secure data file ("file creation step"), a step 402 representing writing securely to the secure data file ("file write step"), and a step 403 representing closing the secure data file ("file close step"). File creation step 401 further comprises a step 404 representing the creation of file data, a step 408 representing the computation of a digital signature, and a step 412 representing the encryption of the file. File write step 402 further comprises a step 416 representing the location of the place within the file to write, a step 420 representing decryption of the cryptography block within which the file write is to take place, a step 424 representing the encryption of the data to be written, a step 428 representing the alteration of the digital signature and a step 432 representing the writing of the encrypted data to the file. File close step 403 further comprises a step 434 representing the writing of a modified digital signature to the file and a step 438 representing file closure.

In step 401 a file, which in the present case is a series of data, is created in normal fashion by first generating data to be saved in step 404. Next, process 400 calculates a digital signature and places that signature within the file structure in step 408. The digital signature will generally, but need not, be placed with the header information of the file. In step 412, the process 400 encrypts the file, including the header and the digital signature, usually employing a pre-defined encryption key.

When process 400 needs to write to the encrypted file it employs file write step 402, which first searches (or counts) through the encrypted file to find the correct place to write data in step 416. Step 416 may include any of various means to map the unencrypted file position to the encrypted file position. In step 420, the process 400 decrypts a block of data within which is the data position to be written to. The size of the block to be decrypted will depend on the particular encryption and decryption technique used, and can vary widely. Next, in step 424, the process 400 encrypts the data to be written to the file. Process 400 next in step 428 alters the encrypted digital signature of the file such that it reflects a file with the new data replacing the old data. In step 432, process 400 writes the newly encrypted data to the file.

When closing the file in step 403, process 400 first writes the corrected digital signature to the file in step 434 and then commences normal closure procedures in step 438. It should be noted that many of the steps in process 400 could be completed in an order other than the one shown here. For example, it is possible to write a new digital signature after each write operation 402, as opposed to in the close operation 403. It would also be possible, for example, to reverse the order of steps 420 and 424.

A digital signature, as used in the present context, means a string of authentication data generated from a string of actual data, wherein the size of the authentication data is usually smaller than the size of the actual data. Digital signatures appropriate for use in the present invention may be generated by any number of methods. In one embodiment of the invention, a digital signature is generated using a function Q(a,b), where a and b are separate pieces of data. The digital signature (DS) is computed by iteration of DS=Q(DS, aᵢ) aᵢ is a set of data subset of uniform length, where i={0...N}, and the length of data to be authenticated in the file is N times the legnth of any aᵢ. In this embodiment, the intial value of DS can be set arbitrarily.

It is preferable that the function Q(a,b) be invertible, such that Q(Q(a,b),b) = a. For example, if a and b are 8 byte strings, then Q(a,b) results in an 8 byte string c. Then Q(c,b) results in the original 8 byte string a. Likewise Q(c,a) results in the 8 byte string b. It is also desirable that the function be symmetric, that is that Q(a,b) = Q(b,a), and that Q(Q(a,b),c) = Q(Q(c,b),a).

In one embodiment of the present invention, a exclusive OR ("XOR") function Q is used to generate a digital signature such that Q(a,b) = a XOR b. The XOR function is a binary function generating a true result if either (but not both) of the input values are true. For example, if a is the binary sequence "1010", and b is the binary sequence "1001", then Q(a,b) = a XOR b = 0011 = c. Then Q(c,b) = 1010 = a, and the preferred relationships for the function Q are satisfied.

A relatively small digital signature can be generated from a relatively large set of actual data by breaking a data file into small blocks of uniform size (the desired size of the digital signature), and using the XOR function between all such small blocks. Suppose, for instance, an actual data subset of 16 bytes needs a digital signature of 4 bytes. The 16 byte data sequence may be broken into four 4-byte blocks, b₀, b₁, b₂ and b₃. A digital signature DS can be formed by the operation DS = b₀ XOR b₁ XOR b₂ XOR b₃. This operation yields a 4-byte block that may be used as a digital signature. Of course, the choice of a 4-byte block length is arbitrary.

The commutative and associative properties of the function Q are useful in manipulating data. Suppose, for example, that we wish to alter 4-byte block b₂, replacing it with 4-byte block R. The new digital signature DS' could then be calculated using the formula DS' = b₀ XOR b₁ XOR R XOR b₃, but could also be calculated using the formula DS' = DS XOR b2 XOR R. When the number of 4-byte blocks becomes large, the latter procedure becomes relatively efficient.

Encryption (as opposed to authentication) of a file may also be accomplished by a number of different means. In one embodiment of the invention, the Blowfish algorithm is used. Blowfish encryption is a symmetric block cipher developed by Bruce Schneier . It is a preferred algorithm for use with embodiments of the present invention, because it is simple (generally requiring less than 5K of memory to implement); it is fast (usually requiring 18 clock cycles per byte), the key length is variable and can be as long as 448 bits; it uses key-dependent S boxes, making brute-force attacks more difficult than may be apparent because of the time consuming sub-key generation; and it uses mixed operators, making crypto-analysis very difficult. Code implementing the Blowfish algorithm is publicly available for a number of computing languages. See Stallings, Cryptography and Network Security, 2^{nd} Ed., Prentice Hall, Upper Saddle River, NJ, 1998, hereby incorporated by reference, describing the Blowfish and other algorithms suitable for the present invention.

The Blowfish algorithm as used in one embodiment of the present invention is a symmetric key algorithm, meaning that the encryption key ("EK") is equal to the decryption key ("DK"), and can be the same as or approximately the same as an arbitrary key less than 448 bits in length chosen by a user (a "user key" or "UK"). The Blowfish algorithm, however, is not the only possible choice. It is also possible to use other symmetric key systems or even an asymmetric encryption algorithm (where EK is different from DK).

Whether or not the Blowfish algorithm is used, embodiments of the present invention generally employ functions for encrypting and decrypting data subsets. Such a function may be called encrypt(X, i, EK), where X is the data to be encrypted, i is a file counter used to designate the position in a larger block of data (a file) where X resides, and EK is the encryption key. The decryption function decrypt(X, i, DK) decrypts data X a using the decryption key DK. In the embodiments of the present invention, it is preferable that decrypt(encrypt(X, i, EK), i, DK)=X, for every i, and that encrypt(X, i, EK) not be equal to X and not be equal to encrypt(X, j, EK') for i different from j or EK different from EK'.

When encrypting a file, if the Blowfish algorithm is used, it is preferably augmented by the use of a position-dependent scrambling mechanism or other means for further safeguarding data. This is because output from the Blowfish algorithm has a one-to-one mapping characteristic, such that text files written in a known language will be subject to statistical attacks based on the frequency of letter usage. In one embodiment of the invention, therefore, having functions Blowfish_encrypt(X, EK) and Blowfish_decrypt(X, DK), the data to be encrypted using the encrypt function is exclusive ORed with the file counter, such that the encrypt(X, i, EK) = Blowfish_encrypt(X XOR i, i, EK). For decryption, the results of the decrypt function are again XORed with the file pointer, such that the decrypt(X, i, DK) = Blowfish_decrypt (X, DK) XOR i.

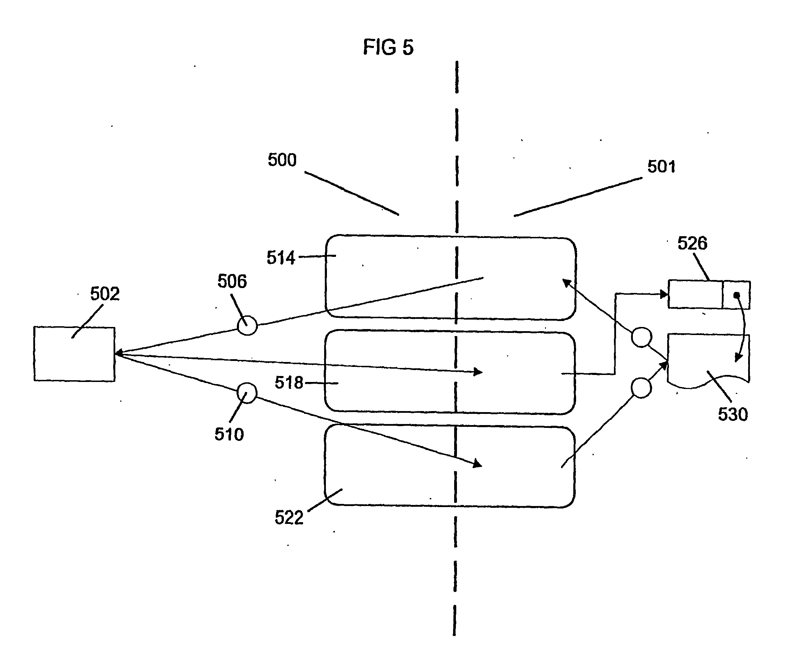

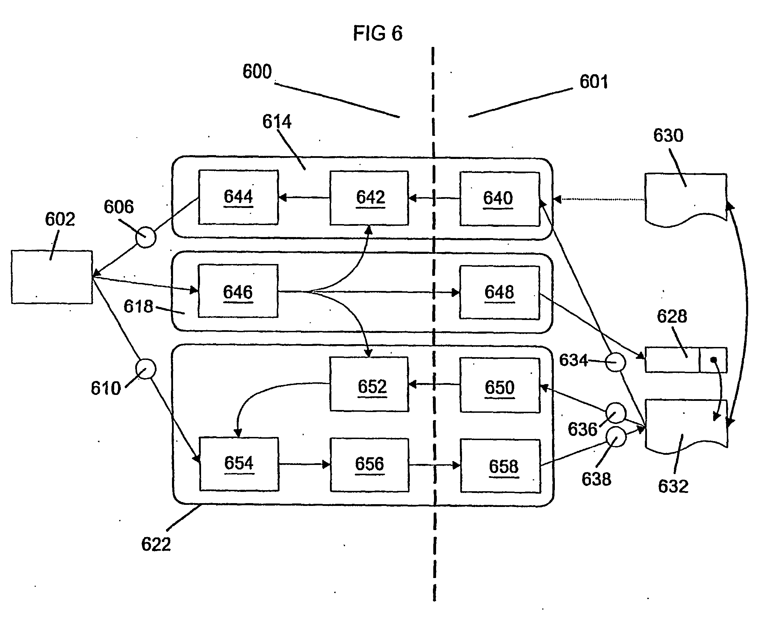

Several embodiments of the invention may be discerned from Figures 5 and 6. Figure 5 represents data flow when normal (unencrypted and unauthenticated) read, seek and write operations (as in the programming language C) are carried out. Figure 5 is divided into an application side 500 and an operating system and hardware side 501, and has a user program 502, data subsets 506 and 510, an ordinary read function 514, an ordinary seek function 518, an ordinary write function 522, a pointer 526 and an ordinary storage file 530. Those operations drawn on the application side 500 are accomplished in the application code, those drawn on the operating system and hardware side 501 are accomplished in the operating system code and/or hardware.

In an ordinary seek function 518, as represented in Figure 5, a user program requests that the logical pointer 526 be set to a user-defined position within the file 530. The seek operation enables random access to file 530. If the user program 502 needs to read file 530, at a position specified by the logical pointer 526, it can call ordinary read function 514 and receive data subset 506 ("data subset" as used in the specification can refer to any length of data, but in the context of Figure 5, usually means a single byte. A "proper subset", as used in the specification, means a subset of data from a file that is less than the entire file and is not empty). In most implementations, the logical file pointer 526 will then be incremented by the number of characters read. If program 502 needs to write data to the position pointed to by logical pointer 526, it calls ordinary write function 522 passing data subset 510, which is then in turn written to file 530 at the position specified by logical pointer 526.

This data flow as represented in Figure 5 may be contrasted with the data flow of an embodiment of the present invention as represented in Figure 6. Figure 6, much as Figure 5, is divided into an application side 600 and an operating system and hardware side 601, and has a user program 602, data subsets 606 and 610, a read function 614, a seek function 618, a write function 622, a physical pointer 628, an encrypted physical storage file 630, an encrypted temporary storage file 632, and encrypted data subsets 634, 636 and 638. Read function 614 further comprises a step 644 representing authentication of data, a step 642 representing the decryption of data, and a step 640 representing the reading of data. Seek function 618 further comprises a step 646 representing pointer mapping and a step 648 representing the seeking of the user specified file position. Write function 622 further comprises a step 650 representing the reading of data, a step 652 representing the decryption of data, a step 654 representing updating of a digital signature, a step 656 representing encryption of data, and a step 658 representing the writing of data. Those operations drawn on the application side 600 are accomplished in the application code, those drawn on the operating system and hardware side 601 are accomplished in the operating system code and hardware.

In the data flow of Figure 6, user program 602 has generated a physical pointer 628 stored in operating system variable storage (system heap or similar). This physical pointer contains the current position in an encrypted temporary file, much as the logical pointer 526 of Figure 5 (maintained by the operating system) contained the current position in the ordinary file 530. In Figure 6, an encrypted, temporary file 632 is created, possibly in memory, together with physical pointer 628, to provide a degree of crash-stability. The user program 602 reads from, seeks in and writes to only the encrypted, temporary file. That way, if the system crashes, the original file contents will not be lost or altered beyond usability. At file closing, encrypted, temporary file 632 is copied to physical file 630.

In performing a seek operation, program 602 calls seek function 618. The embodiments of the present invention as represented in Figure 6 are designed to be transparent to user program 602, so the call from user program 602 to seek function 618 will rely on, from the perspective of the programmer of application 602, , the logical pointer similar to the normal case represented in Figure 5. Thus, in Figure 6, the first step 646 of seek function 618 is to map the logical pointer into the physical pointer 628, so that the encrypted temporary file 632 may be operated upon rather than the encrypted physical file 630. Seek function 618 then performs a standard seek operation at step 648, but using the physical pointer 628 instead of the logical pointer.

In performing a read operation, user program 602 calls read function 614. Read function 614 first, in step 640, reads a segment of encrypted data 634 from encrypted, temporary file 632. The data subset 634 is then decrypted by a function local to application 601 (meaning on application side 600) at step 642. The decrypted data is then authenticated using the digital signature of encrypted, temporary file 632, and if successful, used by user program 602.

In performing a write operation, user program 602 calls write function 622, passing data subset 610. Write function 622 first, in step 650, performs a read of encrypted data subset 636 at the position user program 602 wishes to write, as specified by physical pointer 628. The data subset 636 is then decrypted in a local function at step 652. The unencrypted digital signature of encrypted, temporary file 632, which was stored in memory upon the opening of encrypted, temporary file 632 is updated in memory using the now unencrypted data subset (formerly data subset 636) read from encrypted, temporary file 632 and the unencrypted data subset 610 that will be written to encrypted, temporary file 632. That is, the unencrypted data read from the temporary file and the encrypted data to be written can be used to update the digital signatuer without entirely recomputing it. The data subset 610 is then encrypted in step 656 and written to encrypted, temporary file 632 in step 658 as encrypted data subset 638. At file close, the altered digital signature (not shown) resident in memory is written to encrypted, temporary file 632, which is copied over physical file 630.

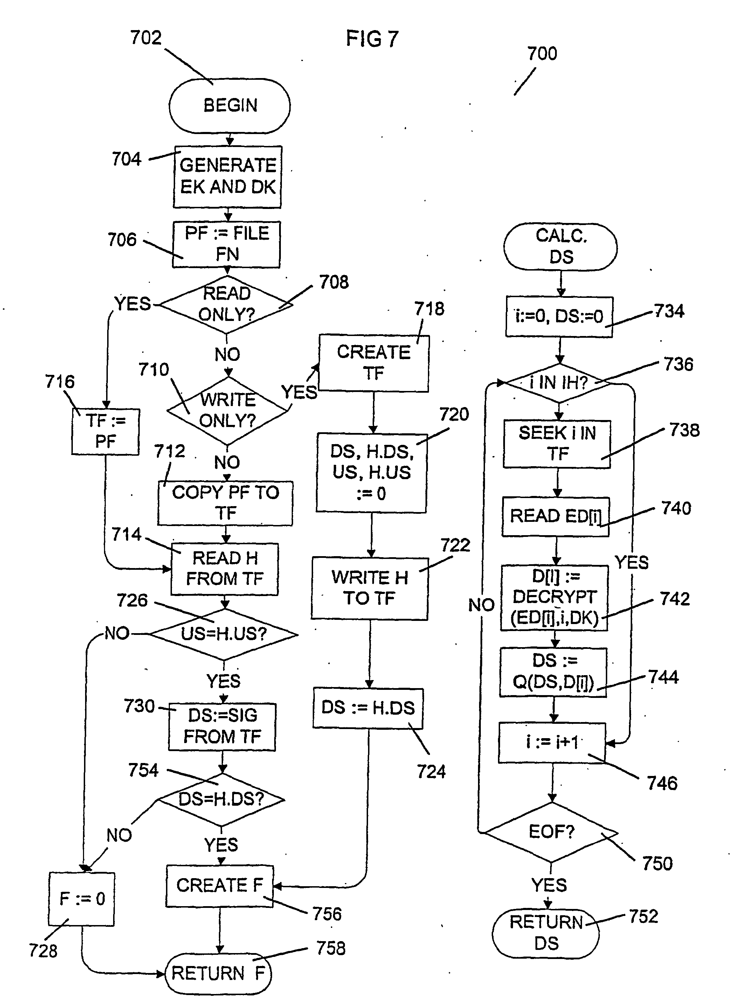

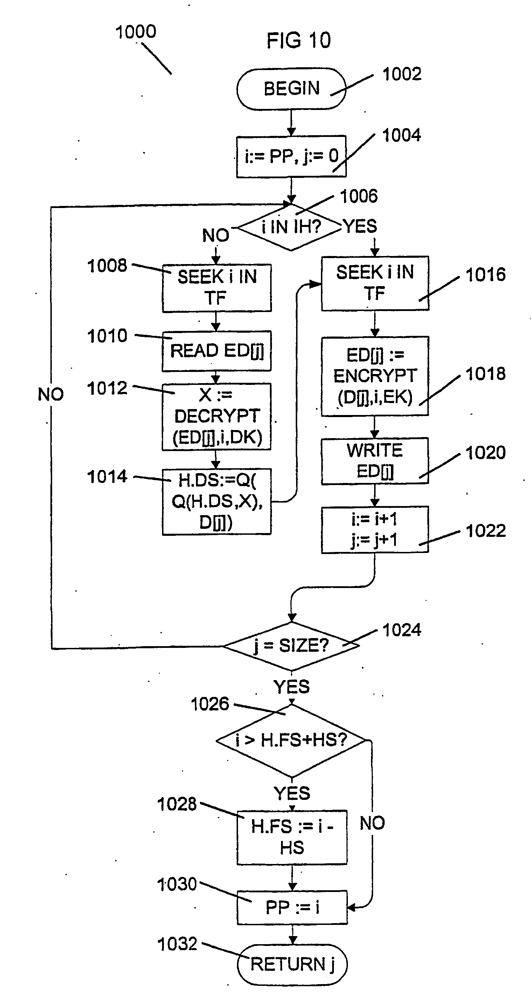

It is advantageous for embodiments of the invention to employ file management procedures such as that illustrated in Figures 7-12. In the following description, Figures 7-12 are introduced as logical flow diagrams that can be used in preferred embodiments of the present invention. For ease of understanding, terms used to represent objects and functions in Figures 7-12 will be used consistently throughout. Thus, if a temporary file is used with respect to Figure 7, the reader can expect that a reference to a "temporary file" with reference to figure 10 will mean the same thing, unless otherwise noted. Moreover, at certain points an object and a reference to that object will be referred to as the same thing. It will be clear to a person of ordinary skill in the art when a reference is intended and when the object itself is intended. Table 1 lists the various abbreviations and their meanings that will be employed with reference to Figures 7 through 12:

**Table II**

| Objects accessible to the user's program | | |
|---|---|---|
| Abbreviation | Object | Description |
| FN | *filename* | Filename associated to a physical DAP file |
| M | Mode | Mode the file is opened (read-only, write-only, read-write, append, etc.) |
| F | Stream to File | Reference to the logical binary file associated to FN |
| UK | User Key | User key used to open the DAP file FN |
| US | User Signature | String used as unique identifier of the DAP file FN (not to be confused with the digital signature, DS, computed on the file itself). |
| LP | Logical Pointer | Logical pointer to a position in the logical binary file S used to seek on the logical file. |

| Objects used internal by cryptographic / authentication functions, accessible through the file object F | | |
|---|---|---|
| Abbreviation | Object | Description |
| EK | Encryption Key | Encryption key derived from UK |
| DK | Decryption Key | Decryption key derived from UK |
| PF | Physical File Stream | Reference to the physical DAP file called FN |
| TF | Temporary File Stream | Reference to the temporary DAP file |
| PP | Physical Pointer | Physical pointer to a position in the file TF |
| DS | Digital Signature | Digital signature computed on the decrypted file TF |
| H | Header | Variable containing the header as written/read to/from TF |

| Objects used internally by the cryptographic / authentication functions | | |
|---|---|---|
| Abbreviation | Object | Description |
| HS | Header's size | Size of the header |
| H.US | Header Users Signature | US stored in the header H |
| H.DS | Header Digital Signature | DS stored in the header H |
| H.FS | Header File Size | Size of the logical file stored in H |
| IH | Indices in Header | This is a list containing the positions, in the file TF, where H.DS is saved. This is fixed by convention. In the proposed implementation IH contains the first 4 bytes of the DAP file since the digital signature is 4 bytes long and is stored (encrypted) at the beginning of the file. |
| D | Data | generic array of data |
| ED | Encrypted Data | generic array of encrypted data |

Figure 7 is a logical flow diagram representing a file opening routine 700 of a preferred embodiment. Figure 7 has steps 702 through 758, representing different abstract logical operations that can be performed in a file open routine 700 of embodiments of the invention.

File open routine 700 begins with a user call to a specialized file open function at step 702. In the present embodiment, the calling application passes the file open routine 700 four parameters: the filename (FN), the mode (M) (for example, a parameter than indicates whether the file is to be read-only, write-only, append-only, etc.) a user key (UK) that is equivalent to the password selected by the user or programmer to be used for encryption purposes, and a user signature (US). The user signature (US) is similar to the user key, but used to distinguish one encrypted file from another. The user signature is not to be confused with the digital signature.

In step 704, routine 700 calculates an encryption key (EK) and a decryption key (DK) from the user key (UK). If the encryption to be used is symmetric, the user key (UK) will be approximately the same as the encryption key (EK), which will be exactly the same as the decryption key (DK). If an asymmetric encryption system such as RSA is used, the encryption key (EK) will be different from the decryption key (DK).

At step 706, the routine 700 uses a standard opening function to open and lock the data file as it exists. The operating system returns a file structure that includes a pointer (PF) to the actual file data associated with the file of filename FN. Routine 700 also uses a temporary file stream (TF) in memory. TF contains a copy of the encrypted file. TF may be thought of as a pointer to temporary, encrypted file 632 of Figure 6. The purpose of the temporary file stream is to conduct all operations in memory first, such that the crash of a remote or hostile system will not result in the corruption of data through the partial and incomplete writes to the actual file. Thus, by means of a temporary file, an embodiment of the invention can revert to its pre-use form when a system accessing a data file protected by an embodiment of the present invention crashes.

Next, routine 700 checks the file mode at step 708. If the file is read-only, routine 700 does not create a new temporary file in memory, but rather TF is assigned the value of PF at step 716. This means that the temporary file stream reference points to the actual file-which is acceptable in a crash safe system if the file is read-only.

Routine 700 then checks the file for write-only status at step 710. If the file is write-only, a temporary file in memory will be created at step 718. At step 720, routine 700 then performs a number of operations in light of its inability to read the digital signature DS (or indeed any information) from the actual file. First, routine 700 sets the variable containing a copy of the file's Digital Signature (DS) to null, defines the internal Header object variable containing a version of the digital signature (normally) read from the actual file (H.DS) to null, sets the internal Header object variable containing a version of the user signature (normally) read from the actual file to equal the user signature (US) as passed to routine 700, and sets the sets the internal Header object variable containing the file length to null.

At step 722, routine 700 calls a write function (similar to one as represented in Figure 10). The write function as called at step 722 will modify the Header object variable containing a copy of the digital signature (H.DS) which is normally read from the actual file but in the present write-only case has been set to zero, necessitating the assignment in step 724. In the write-only case the actual file is to be completely overwritten, therefore no authentication of the actual file is required. Routine 700 then proceeds to step 756, where it forms a more complex than usual file object having as variable fields the physical file reference (PF), the temporary file reference (TF), the user key (UK), the encryption key (EK) the decryption key (DK), the header object (H), and the physical pointer (PP), the latter being a pointer to the position in the temporary file.

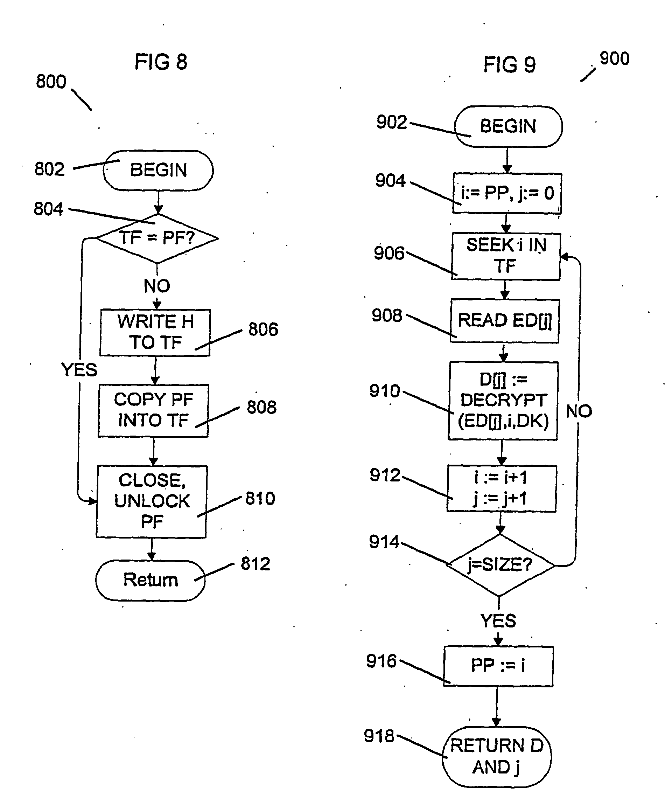

If the file is to be neither read-only nor write-only, routine 700 will proceed from step 710 directly to step 712. At step 712, routine 700 will create and lock a temporary file, and will copy the encrypted contents of the actual file into the contents of the temporary file at step 712. Next, at step 714, routine 700 calls a read function, (similar to one as represented in Figure 9) to read an unencrypted version of the file header from the temporary file, storing the unencrypted file header in object H.

At step 726, a form of authentication using the user signature (US) occurs. The user signature is simply a piece of data that is inserted into the header of each file protected by an embodiment of the invention. The user signature addresses a security concern when multiple similar encrypted files are generated, especially when those files are generated using the same user key. The files may reside on a storage system with a Block Allocation Map that logically links filenames to actual data. It is relatively easy, however, to change data that associates a filename to data located on a storage system, and a user may not be able to distinguish the multiple, similar encrypted files except by filename. The user signature addresses this need by allowing the user to place a unique identifier within the encrypted portion of the file, thus providing a secure, unique identifier for each file. The user signature is envisioned to be particularly useful where an application is generating output iteratively. After ten output cycles, an unauthorized agent may seek to replace the final set of output with a previous set of output. Even if the files are otherwise substantially identical, the user signature would allow the user to distinguish the files.

At step 726, then, routine 700 compares the user signature passed to routine 700 with the user signature contained in the file header. If the user signature does not match, the routine 700 returns a null file object, indicating a failed open.

Assuming the user signatures match, routine 700 then performs a second authentication step. First, at step 730, routine 700 calculates the digital signature of the temporary, encrypted file located in memory. Step 730 comprises, for example, steps 734-752. At step 734, a counter index i is set to zero, as is a variable for the digital signature (DS). The counter i will be used to step through the contents of the temporary file. At step 736, routine 700 checks to make sure that the counter i is not pointing to an area of the file which is not used to calculate the digital signature. This information is provided by the Indices in Header object (IH). The counter i will step through the non-calculated area by means of steps 736 and 746.

When the counter i is incremented to the logical beginning point of the file for purposes of digital signature calculation, the file pointer for temporary file TF will be set to the position indicated by the counter i at step 738. At step 740, a data subset from the temporary file is read into an encrypted data array (ED). At step 742, the most recent data subset is decrypted and the decrypted result is stored in a decrypted data array (D). At step 744, an updated digital signature is computed using the latest decrypted data subset D[i], and the process continues with steps 746, 736 and 750 until the end of file is reached. If information that should not be included in the digital signature calculation (such as the digital signature itself) is found in various non-contiguous data subsets, throughout the file, they will be skipped over in the process calculation by the mapping provided in object IH. At step 752, the computed digital signature is returned, if steps 732-752 are designed as a separate function.

Routine 700 then proceeds from step 730 to step 754, by comparing the digital signature computed as in steps 732-752 with the digital signature as read from the file. If the signatures do not match, it means the file has been altered, and routine 700 passes returns a null file object at step 728, indicating file open failure. If the signatures do match, the file has been successfully opened and authenticated. Routine 700 then builds a specialized file object as previously described in step 756, and returns the file object at step 758.

An exemplary file close algorithm for an embodiment of the invention is represented in Figure 8. Figure 8 is a logical flow diagram illustrating a file close routine 800 of a preferred embodiment. File close routine 800 has steps 802 through 812, representing different abstract logical operations that can be performed in a file close routine 800 of embodiments of the invention.

File close routine 800 begins with a user call 802 passing a file object (F). Routine 800 first checks at step 804 whether file F is being used in read-only mode, by checking whether the temporary file is the same as the actual file (since the temporary file is unnecessary in read-only mode, and therefore not created in this embodiment). If the file is a read-only file, routine 800 simply closes the file at step 810 and returns at step 812.

If the file is not a read-only file, then routine 800 updates the actual file with the contents of the temporary file. Again, the use of a temporary file to make changes allows a certain degree of crash safety, but it is not a necessary part of the invention. At step 806, routine 800 writes an updated version of the decrypted header object H into the encrypted temporary file in memory by means of a write function (similar to one as represented in Figure 9). At step 808, routine 800 copies the contents of the temporary (encrypted) file into the actual file, thus incorporating any changes that have been made to the temporary file into the actual file. The temporary file is then erased. At steps 810 and 812, routine 800 closes and unlocks the actual file, and returns.

An exemplary file read algorithm for an embodiment of the invention is represented in Figure 9. Figure 9 is a logical flow diagram illustrating a file read routine 900 of a preferred embodiment. File read routine 900 has steps 902 through 918, representing different abstract logical operations that can be performed in a file read routine 900 of embodiments of the invention.

Routine 900 enters at step 902 from a user call passing a file object F and a size parameter (S) that indicates the size of the data to be read from the file F. At step 904, two counters are set. Counter i is set to the physical pointer (PP), and counter j is set to zero. At step 906, the physical pointer of the file TF is set to the value of counter i, or the value of the physical pointer PP. Reading the file then begins at step 908. A standard read function is used at step 908 to obtain an encrypted data subset from the temporary file (TF), which is stored in an encrypted data array (ED). The encrypted data so obtained is decrypted at step 910, and assigned to a decrypted data array D. Counters i and j are incremented at step 912, and the loop is repeated at step 914 until j reaches the size (S) of the data to be read, indicating that all necessary data has been read. At step 916, routine 900 assigns the final value of i (which points to the position in the temporary file) to PP.

An exemplary file write algorithm for an embodiment of the invention is represented in Figure 10. Figure 10 is a logical flow diagram illustrating a file write routine 1000 of a preferred embodiment. File read routine 1000 has steps 1002 through 1032, representing different abstract logical operations that can be performed in a file read routine 1000 of embodiments of the invention.

Routine 1000 begins execution at step 1002 with a user call passing routine 1000 a file object (F), a data object (D) and a size variable (size) as parameters. File object (F) is the file to be written to, data object (D) is the data to be written, and size variable (size) is the size of data object D. At step 1004, routine 1000 sets two counters: counter i is set to the location of the physical pointer (PP), and counter j is set to zero.

Routine 1000 next enters a loop at step 1006. Routine 1000 first checks an Indices in Header (IH) object, to determine whether the file pointer is currently pointing within a data subset that is not used to calculate the digital signature. If i is not pointing to data used in the calculation of the digital signature, routine 1000 will immediately jump to step 1016 to begin an encrypted write sequence.

If i is pointing to data used in the calculation of the digital signature, then the digital signature must be corrected to match the new data to be written. To accomplish this task, routine 1000 at step 1008 first sets the file pointer of the temporary file to the current position of i. Next, at step 1010, routine 1000 uses a standard read routine to obtain an encrypted data subset from the temporary file (TF). The encrypted data subset is stored in an encrypted data array ED. The encrypted data subset is then decrypted at step 1012 and assigned to a temporary variable X. An updated digital signature is calculated at step 1014 and assigned to the decrypted header object H, using the function Q, the decrypted actual data, and the decrypted data to be written. Because of the properties of the function Q, heretofore explained, the revised digital signature can be quickly evaluated. At step 1016, the location of the physical pointer in the temporary file is again updated to the current value of i.

At step 1018, the data to be written from data object D is encrypted using the encryption key and assigned to the encrypted data array (ED). Routine 1000 then uses a normal write function to write the encrypted data subset to the temporary file. At steps 1022 and 1024, the counters i and j are incremented and the loop is processed until j is equal to the size of the data to be written (size). Once the loop comprised of steps 1006 through 1024 is finished, routine 1000 then checks to make sure that the file size variable of the Header object H (H.FS) is correct. In step 1026, routine 1000 checks to see whether the data over the end of the current file was written (an append-write). If so, routine 1000 updates the file length stored in the header object (H.FS) to the correct size. Routine 1000 then assigns the current physical pointer location in step 1030 and returns the number of data subsets written in step 1032.

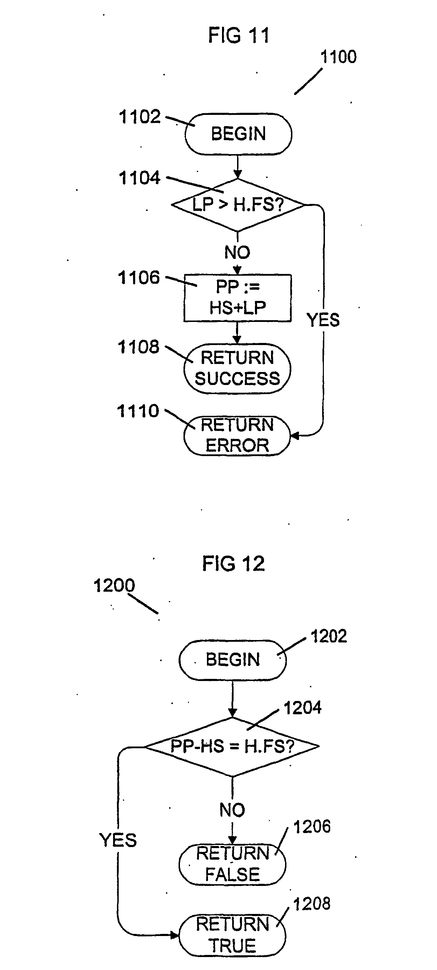

An exemplary file seek algorithm for an embodiment of the invention is represented in Figure 11. Figure 11 is a logical flow diagram illustrating a file seek routine 1100 of a preferred embodiment. File seek routine 1100 has steps 1102 through 1110, representing different abstract logical operations that can be performed in a file read routine 1100 of embodiments of the invention.

File seek routine 1100 begins execution from a user call passing a file object (F) and a logical pointer (LP). At step 1104, routine 1100 checks to see whether logical pointer (LP) is greater than the current file size (H.LS). In other words, routine 1100 checks to see whether the current file pointer is pointing to a position that occurs after the end of the file. If it is, routine 1100 jumps to step 1110 and returns an error.

If the logical pointer (LP) is pointing within the boundaries of the file, however, routine 1100 proceeds to step 1106, where the physical pointer PP (used to access the temporary encrypted file) is assigned the value of the logical pointer plus the header size. This is because the logical pointer (LP) normally sets the zero position at the end of a file header. After performing this adjustment, routine 1100 returns a value indicating it has successfully executed.

An exemplary end of file (eof) algorithm for an embodiment of the invention is represented in Figure 12. Figure 12 is a logical flow diagram illustrating a file eof routine 1200 of a preferred embodiment. Eof routine 1200 has steps 1202 through 1208, representing different abstract logical operations that can be performed in an eof routine 1200 of embodiments of the invention.

Eof routine 1200 is used to determine whether the physical pointer to the temporary file currently stands at the end of the file. It begins execution with a user call that passes a file object (F) at step 1202. At step 1204, routine 1200 checks to see whether the physical pointer minus the header size (HS) is equal to the file size variable stored in the header object (H.FS). If it is then routine 1200 has detected an end of file at the current file position and returns true in step 1208. If the physical pointer minus the header size (HS) is not equal to the file size variable stored in the header object (H.FS), then the physical pointer is not pointing to the end of file, and routine 1200 returns false at step 1206.

A specific example of software embodiments of present invention may be referred to as the "DAP embodiment" (where the acronym DAP refers to "Distributed Authentication Protocol"). The functions of the DAP embodiment can be implemented in the C language, with the intention that their operation be totally transparent to the programmer, except that the name of the normal stdio C functions must be changed to add a "DAP_" prefix. For example, to use the C/C++ function fwrite with the protections of embodiments of the present invention, the programmer would simply need to include the relevant code at compile time, and call the function DAP_fwrite{F,D,size} instead of the normal fwrite call, with all other aspects of the program remaining unchanged. In particular equivalent functions take the same arguments in the same order and return the same type of variable. All decryption and authentication is performed in a secure manner as describe with reference to embodiments of the present invention, but in a manner whose details are hidden to spare the programmer time and effort.

A "function library" or "library" is used in the specification to mean a collection of functions, in source code or otherwise, oriented toward a particular end. The DAP embodiment is preferably implemented as a function library in three layers: A first layer encrypts/decrypts data in input/output using a non-local arbitrary-length-key encryption algorithm. A second layer implements the authentication procedures such as those heretofore described as well as a file size check. It is preferable that the digital signature is computed on the unencrypted data including the user signature and of any metadata (meaning secondary data, included in a file to describe the attributes of the primary data), information stored in the file (with the exclusion of the bytes where the digital signature itself is stored). A third layer maps a virtual pointer to the physical pointer to the file.

In such a layered embodiment, a program that knows the user key and user signature is able to open a DAP file, read and write data from it without seeing the DAP layers and any metadata that our protocol stores together with the real data. These layers are in a preferred embodiment invisible to the user program.

According to the DAP embodiment, a user program can access DAP routines through the following basic functions DAP_fopen, DAP_fopenq, DAP_fclose, DAP_fwrite, DAP_fread, DAP_fseek and DAP_ftell. More functions are actually implemented in practice but they can all be derived from the ones presented herein. The names of these functions are irrelevant and they are not a requirement of the protocol.

In the DAP embodiment, the functions perform in the following manner:

DAP_fopen: This function takes as argument the name of the file to be open (FN), the mode we want to access the file (M = read / write / append), the user key (UK) to encrypt/decrypt the file and the user signature (US). If the file does not exist it creates the file and writes the encrypted metadata (digital signature, user signature and logical file size). Once the file exist: it opens the file, locks it, copies it into a temporary file, performs a validation of the digital signature by locally decrypting the file using the user given key and compares the real user signature with the user signature provided as input. If any of these checks fails the function unlocks the file and returns some failure signal. If all checks are successful the function returns some reference to a structure containing pointers to the two files (the old one and the temporary one) and to the internal variables. The function has the following syntax:

FILE *DAP_fopen (char *filename, char *mode, char *key, char *signature);

The DAP_fopen function opens the file with the filename "filename", associates it with a stream, and returns a pointer to the object controlling the stream. The initial characters of "mode" determine how the program manipulates the stream and whether it interprets the stream as binary. The initial characters must be one of the following sequences: "rb" -- to open an existing binary file for reading; "wb" -- to create a binary file or to open and truncate an existing binary file, for writing; "ab" -- to create a binary file or to open an existing binary file, for writing (the file-position indicator is positioned at the end of the file (possibly after arbitrary null byte padding) before each write);"rb+" -- to open an existing binary file for reading and writing; "wb+" -- to create a binary file or to open and truncate an existing binary file, for reading and writing; "ab+" -- to create a binary file or to open an existing binary file, for reading and writing. The file-position indicator is positioned at the end of the file (possibly after arbitrary null byte padding) before each write.

If the file is created by the DAP_open function, it is signed with the given signature and encrypted using the given key. If the file already exists, it is authenticated using the given key and signature. The function returns 0 (null pointer) if the file cannot be authenticated. The stream returned by the function is actually a pointer an internal data structure created by DAP_fopen, casted into a pointer to file (to effect the use of a temporary file for crash-safety). All DAP functions take the ouput stream returned by DAP_fopen as input. The output stream behaves as if it were a pointer to the DAP file.

DAP_fopenq has the same syntax as fopen but works like DAP_fopen. When using DAP_fopenq, the user is prompted for a key and signature, using the standard input and the standard ouput.

The DAP_fclose function only takes as argument some reference to the file that has to be closed. It copies back the temporary file into the original file, removes all locks and removes the temporary file. The syntax is

int DAP_fclose(FILE *stream);

The function closes the file associated with the DAP stream "stream". It returns DAP_OK if successful; otherwise, it returns DAP_KO. The fclose function writes any buffered output to the actual file, deallocates the stream buffer if it was automatically allocated, and removes the association between the stream and the file. DAP_OK and DAP_KO are defined in the DAP header file (dap.h) and they correspond to 1 and 0 respectively.

The DAP_fwrite function takes as input some user data. It allows the user program to write on the encrypted, double-signed DAP file. It updates the digital signature to include the new data, encrypts the data using the encryption key associated to the file and writes the encrypted data in the temporary copy of the file. The syntax is

size_t DAP_fwrite(const void *restrict ptr, size_t size, size_t nelem, FILE *stream);

The function writes characters to the output DAP stream "stream", accessing values from successive elements of an array whose first element has the address (char *)ptr until the function writes size*nelem characters. The function returns n/size, where n is the number of characters written.

The DAP_fread function allows the user program to read from the DAP file. It reads data from the temporary copy of the file, decrypts the data using the key associated and returns it. The syntax is

size_t DAP_fread(void *restrict ptr, size_t size, size_t nelem, FILE *restrict stream);

The function reads characters from the input DAP stream "stream" and stores them in successive elements of the array whose first element has the address (char *)ptr until the function stores size*nelem characters. It returns n/size, where n is the number of characters it read. If n is not a multiple of size, the value stored in the last element is indeterminate.

The DAP_fseek function maps a virtual pointer, passed as argument, to the real physical pointer associated to the file. It allows the user program to move up and down in the file without seeing any metadata and any encryption. The syntax is

int DAP_fseek(FILE *stream, long offset, int mode);

The function sets the logical pointer (LP) for the stream "stream" (as specified by offset and mode), clears the end-of-file indicator for the stream, and returns DAP_OK if successful, DAP_KO otherwise. "offset" is a signed offset in bytes: if "mode" has the value SEEK_SET, fseek sets the logical pointer (LP) to the value of the offset; if "mode" has the value SEEK_CUR, fseek adds offset to the current value of the logical pointer; if "mode" has the value SEEK_END, fseek sets the logical pointer to the end of logical file (stream) substracted of the value of the offset.

The DAP_ftell function is the opposite of DAP_fseek. It returns the current position of the logical pointer to the data in the file. It allows the user to inquiry about the current position in the file. The syntax is

long DAP_ftell(FILE *stream);

The function returns an encoded form of the file-position indicator for the stream "stream" or returns the value -1. For a binary file, a successful return value gives the number of bytes from the beginning of the file.

The DAP_feof function returns a non-zero value if the logical pointer reached the end of the logical file associated to the stream "stream". The syntax is

int DAP_feof(FILE *stream);

The DAP_fflush function writes any buffered output to the file associated with the stream "stream", copies the temporary file into the physical file and returns DAP_OK if successful; it returns DAP_KO otherwise. The syntax is

int DAP_fflush(FILE *stream);

The DAP_fgetc function reads the next character c (if present) from the input stream "stream", advances the logical pointer, and returns (int)(unsigned char)c.

int DAP_fgetc(FILE *stream)

The DAP_fputc function writes the character (unsigned char)c to the output stream "stream", advances the logical pointer, and returns (int)(unsigned char)c. The syntax is

int DAP_fputc(int c, FILE *stream);

The DAP_fsize function returns the size of file associated to the stream. The syntax is

int DAP_fsize(FILE *stream);

The DAP_ftruncate function truncates the file associated to the stream at the specified size. It returns DAP_OK on success, DAP_KO otherwise. The syntax is

int DAP_ftruncate(FILE *stream, size_t size);

The DAP_faccess function tries to access the file associated to the stream for binary read/write and tries to authenticate the file. If the file cannot be accessed or is not authenticated it returns DAP_KO. On success it returns DAP_OK. The syntax is

int DAP_faccess(FILE *stream);

The DAP_secure function takes the ordinary input file and produces an output file secured with the given key and signature. The syntax is

int DAP_secure(char *input, char *output, char *key, char *signature);

The DAP_unsecure function takes a secure input file and produces an ordinary output file. The syntax is

int DAP_unsecure(char *input, char *output, char *key, char *signature);

The DAP_add_parity(a, b) function is used to create a digital signature between data subsets a and b, and is the equivalent of the abstract function Q(a,b) described above.

The DAP embodiment is implemented as an Application Program Interfaces written in the "C" language. The Blowfish algorithm previously described was used for encryption with a position dependent scrambling. The digital signature is computed using a 32 bit XOR checksum. The DAP library is designed to have names which are similar to those of the standard input/output function for file/streams of the "C" language, as specified in the ANSI "stdio.h" library. See Table III for a comparison list

**Table III**

| DAP LIBRARY | ANSI stdio.h |
|---|---|
| DAP_fopen | DAP_fopen |
| DAP_fopenq | (same) |
| DAP_fclose | DAP_fclose |
| DAP_fseek | DAP_fseek |
| DAP_feof | DAP_feof |
| DAP_ftell | DAP_ftell |
| DAP_fflush | DAP_fflush |
| DAP_fwrite | DAP_fwrite |
| DAP_fread | DAP_fread |
| DAP_fgetc | DAP_fgetc |
| DAP_fputc | DAP_fputc |
| DAP_access | DAP_access |
| DAP_fsize | |
| DAP_ftruncate | |
| DAP_securefile | |
| DAP_unsecurefile | |

Except for the DAP_fopen() functions, the functions of the DAP embodiment have, to the user program level, the same functionality as the corresponding stdio functions. Internally they are very much different since the former do not just read and write on the file but they implement the DAP protocol and the file will be automatically locked, encrypted and signed/authenticated.

The only function that differs from the corresponding stdio function is DAP_fopen. It has the following function prototype:

FILE* fopen(char *filename, char *mode, char *key, char *signature)

They first two arguments are the same as the stdio fopen. The latter two arguments are required by the DAP protocol. The arguments are the following: "filename" is a pointer to a string where the name of the file (FN) to be opened (or created) is stored; "mode" parameter is a pointer to a string that specifies how the file is going to be opened (M) (supported modes are the standard ANSI modes: rb,wb,ab,rb+,wb+,ab+ (the file is always opened in binary mode)); "key" is a pointer to a string where the user key (UK) used in the encryption/decryption of the file is stored, signature is a pointer to the string where the user signature (US) of the file is stored. If the file "filename" does not exist and it is opened in wb,wb+,ab or ab+ mode the file is created with the given key and signature. If the file does exist than the check specified by the DAP protocol are performed. On success the file is opened and locked and a number different from zero is returned. Otherwise the file is closed and 0 is returned. Note that the value returned is a pointer to some internal structure casted into a FILE*. This can be used for the corresponding argument of the other DAP functions. Calls to DAP functions and stdio functions, for the same file, cannot be mixed.

Other functions like fprintf and fscanf are not listed here because they internally use fwrite and fread for input/output, therefore their DAP implementation would consist in replacing those internall calls with DAP calls.

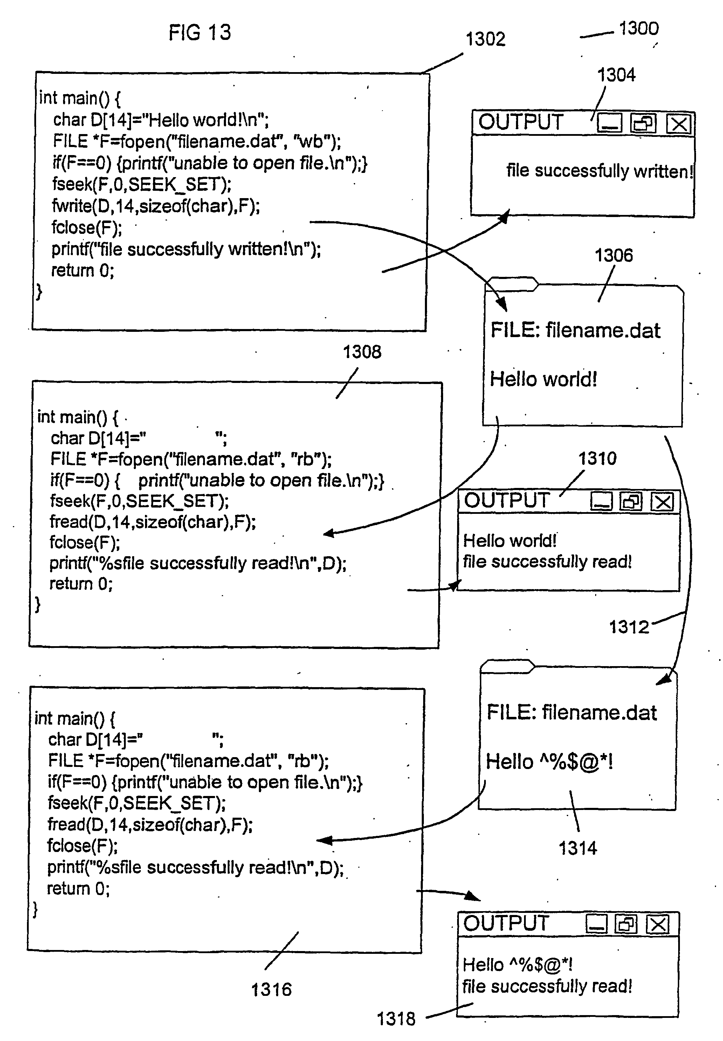

One example of a DAP embodiment is illustrated through Figures 13-14. Figure 13 illustrates how a simple "Hello, world!" program may be written without the DAP embodiments. Figure 13 illustrates a representative computing environment 1300, including several files and sets of executing code (shown in Figure 13 as uncompiled source code for convenience). Figure 13 has a first source code screen 1302, a first output screen 1304, a first text file 1306, a second source code screen 1308, a second output screen 1310, a corruption step 1312, a corrupted text file 1314, a third source code screen 1316, and a third output screen 1318.

When the source code in screen 1302 is executed, a text file 1306 with the simple message "Hello, world!" is created. The successful creation is documented by output screen 1304. Text file 1306 exists in representative computing environment 1300 in an unencrypted state, accessible to all users who know where to find it. When the source code in screen 1308 is executed, the data consisting of the "Hello, world!" text from text file 1306 is read, and the successful reading is indicated in output screen 1310. At step 1312, however, text file 1306 is corrupted by a non-trusted user or program, becoming corrupted file 1314. When the source code in screen 1316 is executed, the corrupted data string is read, but the executing code is unable to discern the corruption of text file 1314, and indicates success in output screen 1318.

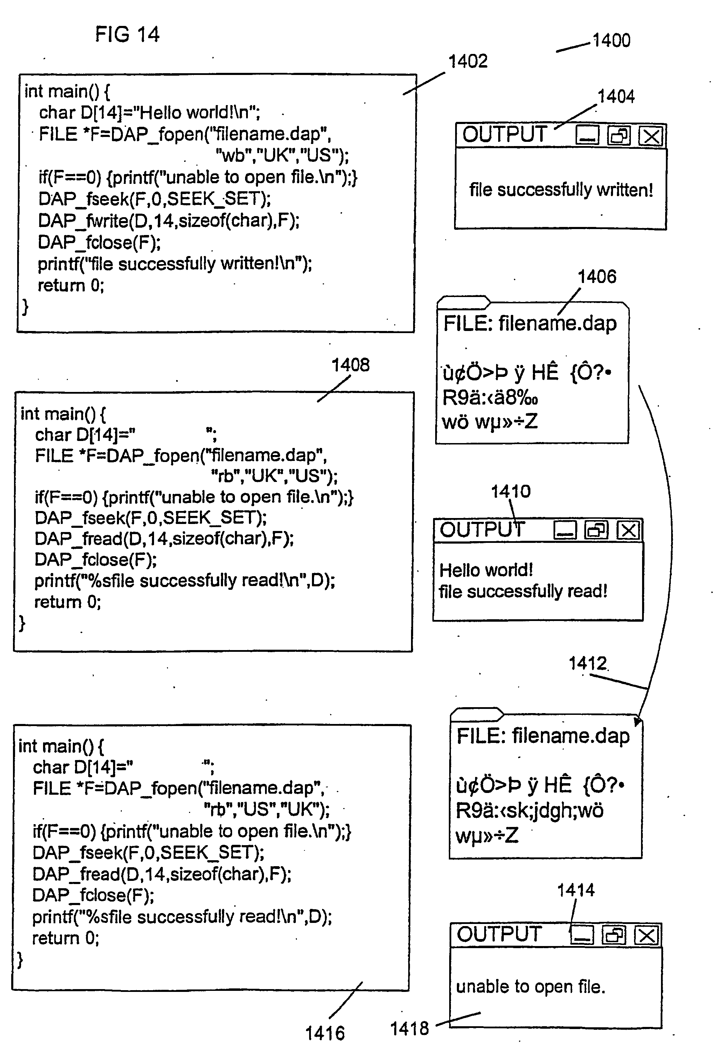

Figure 14 illustrates how a simple "Hello, world!" program may be modified with a DAP embodiment to afford it the protections of an embodiment of the present invention. Figure 14 illustrates a representative computing environment 1400, including several files and sets of executing code (shown in Figure 14 as uncompiled source code for convenience). Figure 14 has a first source code screen 1402, a first output screen 1404, a first text file 1406, a second source code screen 1408, a second output screen 1410, a corruption step 1412, a corrupted text file 1414, a third source code screen 1416, and a third output screen 1418.

The source code of screen 1402 differs from the source code of screen 1302 of Figure 13 in that the function calls are modified to be in the form used with a DAP embodiment. When the source code in screen 1402 is executed, a text file 1406 with the simple message "Hello, world!" is created. The successful creation is documented by output screen 1404. Text file 1406 exists in representative computing environment 1400 in an encrypted state, inaccessible to all users who do not possess the user key (or decryption key in case an asymmetric encription). When the source code in screen 1408 is executed, the data encrypted comprising the "Hello, world!" text from text file 1406 is read and decrypted, all transparently to the programmer, and the successful reading is indicated in output screen 1410. At step 1412, however, text file 1406 is corrupted by a non-trusted user or program, becoming corrupted file 1414. When the source code in screen 1416 is executed, before the corrupted data string is read by DAP_fread(), the executing code underlying the DAP_fopen() function call recognizes that the digital signature does not match the content of the file. The executing code is successfully ascertains the corruption text file 1414, and indicates failure in output screen 1418.

In Figure 14, the user programs (as represented by source code screens 1402, 1408 and 1416) read from, seek in and write to a temporary file, which is a copy of the original file, to provide a degree of crash-stability. The copy is restored into the original file only when the file is properly closed or flushed. In this way, if the system or the user program crashes, the original file contents will not be lost or altered beyond usability.

Often secure data resides in database on a remote server. Such databases can be used to store customer information, military specifications, financial data, laboratory experiments, or any imaginable set of sensitive information. The embodiments of the present invention are envisioned to be particularly useful for database security.

Accordingly, a second example is a general-purpose embedded database library operating securely using the DAP embodiments (DAPDB). The DAPDB database is linked with the user application and resides in the same address space as the user application. The DAPDB is implemented in the form of a function library (or "library"). The database is constructed such that each table is associated to a single DAP file (encrypted, checked, signed); such that the database is not decrypted in memory for obvious security reasons; such that each record in the table is composed by a record key (not to be confused with an encryption key, a decryption key or a user key) and a record body string; for each record the record key and the record body string can have arbitrary size and can contain non-homogeneous structures (for example record bodies can contain strings of arbitrary length or any user defined data structures, in the same fashion the record key can be any user defined data structure); such that a fast record key search that does not require record key decryption or creating temporary index can be used; such that the records in the database can be appended, deleted and replaced; such that the records in the database can be accessed in the order they were appended or modified (The last appended/modified record always appears as the last record in the database) and such that the database is transaction safe (for operations on a single table). In the present embodiment each data table is associated to a hash table of checksums of record keys. Each hash table is stored, signed and encrypted together with the corresponding database table in a DAP file. Once a table is opened the hash table is decrypted and stored in memory for fast search.

As an example of a DAP database a DAPDB table is provided containg an Italian-English dictionary, together with a C program (dapdb_example.c) that uses the DAPDB library functions and provides a simple text mode user interface to read/write a DAPDB table. The example program can be used to search, read and modify the dictionary file. The dictionary file name is "italian.ddb". This file is encrypted with a user key "test" and user signature "italian.ddb".

In the present embodiment, the DAPDB library consists of a variety of functions, described in the following paragraphs.

The DAPDB_open function opens the database table stored in the DAP file "filename" using key and signature as user key (UK) and user signature (US) respectively. On success the function returns a reference to the open table (DAPDB is a C stucture defined in the DAPDB header dapdb.h). It returns 0 if the file cannot be authenticated. The syntax is

DAPDB* DAPDB_open(char *filename, char *key, char *signature);

The DAPDB_close function closes the table referenced by db and closes the DAP file associated to the table. The syntax is

int DAPDB_close(DAPDB* db);

The DAPDB_ropen() is the same as the DAPDB_open() function, but opens the table in read-only mode. The syntax is

DAPDB* DAPDB_ropen(char *filename, char *rkey, char *signature);

The DAPDB_find function searches the table referenced by db for a record key equal to the first key_size charaters pointed by the input rkey variable. If the record is found the function sets an internal record pointer to the location of such record. The function returns DAP_OK on success and DAP_KO on failure. The syntax isint DAPDB_find(DAPDB* db, char *key, long key_size);

The DAPDB_find_next function is the same as the DAPDB_find function, but it starts the search from the record next to the one pointed by the current value of the record pointer. The function returns DAP_OK on success and DAP_KO on failure. The syntax is

int DAPDB_find_next(DAPDB* db, char *key, long key_size);

The DAPDB_fast_append() function appends a new record to the table referenced by db. The record is filled with a key of size key_size and a string (str) of size str_size. The record is appended without checking if the record key already exists. The function returns DAP_OK on success and DAP_KO on failure. The syntax is

int DAPDB_fast_append(DAPDB* db, char *key, long key_size, char *str, long str_size);

The DAPDB_append() function is the same as the DAPDB_fast_append() function but it searches for existing records matching the input record key. If such a record exists, the function returns DAP_KO and the new record is not appended. The function returns DAP_OK if the new record is appended.

int DAPDB_append(DAPDB* db, char *key, long key_size, char *str, long str_size);

The DAPDB_first function moves the record pointer of table db to the first record (defined as the last appended or modified record). The function returns DAP_OK on success and DAP_KO on failure. The syntax is

int DAPDB_first(DAPDB* db);

The DAPDB_last function moves the record pointer of table db to the last record (defined as the most recent appended or modified record). The function returns DAP_OK on success and DAP_KO on failure. The syntax is

int DAPDB_last(DAPDB* db);

The DAPDB_prec function moves the record pointer of table db to the preceding one. The function returns DAP_OK on success and DAP_KO on failure. The syntax is

int DAPDB_prec(DAPDB* db);

The DAPDB_next function moves the record pointer of table db to the next one. The function returns DAP_OK on success and DAP_KO on failure. The syntax is

int DAPDB_next(DAPDB* db);

The DAPDB_getkey function loads the record key of the current record (pointed by the record pointer) of the table referenced by db into the memory address key. The function returns DAP_OK on success and DAP_KO on failure. The syntax is

int DAPDB_getkey(DAPDB* db, void *key);

The DAPDB_getstr function loads the record body string of the current record (pointed by the record pointer) of the table referenced by db into the memory address str. The function returns DAP_OK on success and DAP_KO on failure. The syntax is

int DAPDB_getstr(DAPDB* db, void *str);

The DAPDB_delete function deletes the current record (pointed by the record pointer) of the table referenced by db. The function returns DAP_OK on success and DAP_KO on failure. The syntax is

int DAPDB_delete(DAPDB* db);

The DAPDB_replace function is the same as DAPDB_append() but replaces the current record with the new one. The syntax is

int DAPDB_replace(DAPDB* db, char *key, long key_size, char *str, long str_size);

The DAPDB_transact function closes a database transaction on the table referenced by db. If a program that uses the DAPDB library function fails during its execution, all the tables opened by the program are restored to their content after the latest successful DAPDB_close() or DAPDB_transact() operation. The syntax is

int DAPDB_transact(DAPDB* db);

The DAPDB_keysize function returns the size, in characters, of the record key of the current record of the table referenced by db. The syntax is

long DAPDB_keysize(DAPDB* db);

The DAPDB_strsize function returns the size, in characters, of the record body string of the current record of the table referenced by db. The syntax is

long DAPDB_strsize(DAPDB* db);

The inventors have undertaken to describe and produce examples in terms of the structure and syntax of the C language. It will be seen by those of skill in the art, however, that any number of different programming languages and approaches could be undertaken. Moreover, data structures used to elucidate and exemplify the principles of the invention are generally flexible, and can be implemented in a variety of ways, as can logical operations executed during program flow.

The invention has been described in an exemplary fashion, by means of embodiments that may be readily understood with the teachings of the present disclosure. This is not to imply that the invention is limited to these embodiments. Rather, the techniques and devices of the present invention are envisioned to be useful anywhere an application must execute using sensitive data in an untrusted environment. The invention is not intended to be limited by the exemplary description of the disclosure, but rather only by the following claims.

## Claims

1. A method for managing sensitive data, comprising:
a) a file creation step (401) comprising:
creating a file containing sensitive data (404);
calculating a digital signature for the file (408);
storing the digital signature in the file together with the sensitive data; and
encrypting the file containing the sensitive data (412) and the digital signature to produce an encrypted file; and
b) a file operation step (402) comprising:
performing an input-output operation on a proper subset of the encrypted file (630) without the need to decrypt the entire file;
the file operation step **characterized by** comprising:
decrypting a proper subset of the file in a function local to a trusted application when performing a read operation (642);
decrypting a proper subset of the file in a function local to a trusted application when performing a write operation (652);
updating the digital signature of the file, using the decrypted proper subset (654);
encrypting the proper subset to be written to the file (424);
writing the encrypted proper subset to the file;
encrypting the digital signature (428); and
adding the encrypted digital signature to the file to authenticate it (434).

2. The method of claim 1, wherein the step of performing a file input-output operation on the file further comprises:
inputting a data subset from a file stream (634); and
decrypting the data subset in a local function (652).

3. The method of claim 2, further comprising the step of:
updating the digital signature using the data subset input from the file stream and a data subset to be written to the file (744).

4. The method of claim 3, further comprising the steps of:
encrypting the data subset to be written to the file in a local function to produce an encrypted data subset to be written (656); and
writing the encrypted data subset to be written to the file (432).

5. The method of claim 3, wherein the step of performing the file input-output operation on the file further comprises:
authenticating the file using the digital signature (754).

6. The method of claim 4, wherein the step of performing the file input-output operation on the file further comprises:
authenticating the file using a user signature (726).

7. The method of claim 1, wherein the step of performing a file input-output operation comprises:
inputting a data subset (634, 636, 638) from an encrypted, temporary copy of the file (640); and
decrypting the data subset in a local function to produce an unencrypted data subset read from the temporary, encrypted file (642).

8. The method of claim 7, further comprising the steps of:
updating the digital signature using the data subset input from the encrypted, temporary copy of the file and a data subset to be written to the file (654);
encrypting the data subset to be written to the encrypted, temporary file in a local function (656); and
writing the data subset to be written to the encrypted, temporary file (658).

9. The method of claim 8, further comprising the steps of:
copying the digital signature in memory to the encrypted, temporary file (658); and
copying the encrypted, temporary file to the file (808); and
closing the file (403, 438, 810).

10. The method of claim 8, further comprising the steps of:
authenticating the file using the digital signature (754).

11. The method of claim 9, further comprising the steps of:
authenticating the file using a user signature (726).

12. A machine readable medium comprising code for causing a computer to perform the steps of the method of claim 1, wherein a first function performs the file creation step and a second function performs the file operation step.

13. The machine readable medium of claim 12, wherein the computer code further comprises:
a third function for opening a file, wherein the third function is capable of authenticating a file with an encrypted digital signature.

14. The machine readable medium of claim 13, wherein the third function further comprises:
code for creating a temporary, encrypted file and generating a file stream therefrom.

15. The machine readable medium of claim 14, wherein the computer code further comprises:
code for implementing a digital signature using a symmetric, invertible function.

16. The machine readable medium of claim 15, wherein the computer code further comprises:
code for implementing a user signature within the file for authentication purposes.

17. The machine readable medium of claim 16, wherein the computer code further comprises:
a source code library of functions, implemented such that encryption, decryption and authentication are transparent to a source code programmer.

18. The machine readable medium of claim 16, wherein the computer code is executed in the same address space as a user application.

19. The machine readable medium of claim 16, wherein the computer code further comprises a database library using said first and second functions.

20. The method of claim 1, wherein:
the file creating step further comprises storing a user signature in the file together with the sensitive data;
the step of encrypting the file containing the sensitive data further comprises the user signature; and
the file operating step further comprises encrypting the user signature and adding the encrypted user signature to the file to authenticate it.

## Patentansprüche

1. Verfahren für das Verwalten sensibler Daten, welches umfasst:
a) einen Schritt (401) des Anlegens einer Datei, welcher umfasst:
Anlegen einer sensible Daten enthaltenden Datei (404);
Berechnen einer digitalen Signatur für die Datei (408);
Speichern der digitalen Signatur zusammen mit den sensiblen Daten in der Datei; und
Verschlüsseln der die sensiblen Daten und die digitale Signatur enthaltenden Datei (412), um eine verschlüsselte Datei zu erzeugen; und
b) einen Dateioperationsschritt (402), welcher umfasst:
Ausführen einer Eingabe-Ausgabe-Operation an einer geeigneten Untermenge der verschlüsselten Datei (630) ohne die Notwendigkeit der Entschlüsselung der gesamten Datei;
wobei der Dateioperationsschritt **dadurch gekennzeichnet ist, dass** er Folgendes umfasst:
Entschlüsseln einer geeigneten Untermenge der Datei in einer in einer zuverlässigen Anwendung angesiedelten Funktion bei Ausführen einer Lese-Operation (642);
Entschlüsseln einer geeigneten Untermenge der Datei in einer in einer zuverlässigen Anwendung angesiedelten Funktion bei Ausführen einer Schreib-Operation (652);
Aktualisieren der digitalen Signatur der Datei unter Verwendung der entschlüsselten geeigneten Untermenge (654);
Verschlüsseln der in die Datei zu schreibenden geeigneten Untermenge (424); Schreiben der verschlüsselten geeigneten Untermenge in die Datei;
Verschlüsseln der digitalen Signatur (428); und
Hinzufügen der verschlüsselten digitalen Signatur zu der Datei, um diese zu authentifizieren (434).

2. Verfahren nach Anspruch 1, **dadurch gekennzeichnet, dass** der Schritt des Ausführens einer Datei-Eingabe-Ausgabe-Operation an der Datei weiterhin umfasst:
Eingeben einer Datenuntermenge aus einem Dateistrom (634); und
Entschlüsseln der Datenuntermenge in einer lokalen Funktion (652).

3. Verfahren nach Anspruch 2, welches weiterhin den Schritt des Aktualisierens der digitalen Signatur unter Verwendung der aus dem Datenstrom eingegebenen Datenuntermenge und einer in die Datei zu schreibenden Datenuntermenge (744) umfasst.

4. Verfahren nach Anspruch 3, welches weiterhin die folgenden Schritte umfasst:
Verschlüsseln der in die Datei zu schreibenden Datenuntermenge in einer lokalen Funktion, um eine verschlüsselte zu schreibende Datenuntermenge zu erzeugen (656); und
Schreiben der verschlüsselten, in die Datei zu schreibenden Datenuntermenge (432).

5. Verfahren nach Anspruch 3, **dadurch gekennzeichnet, dass** der Schritt des Ausführens der Datei-Eingabe-Ausgabe-Operation an der Datei weiterhin das Authentifizieren der Datei unter Verwendung der digitalen Signatur (754) umfasst.

6. Verfahren nach Anspruch 4, **dadurch gekennzeichnet, dass** der Schritt des Ausführens der Datei-Eingabe-Ausgabe-Operation an der Datei weiterhin das Authentifizieren der Datei unter Verwendung einer Anwendersignatur (726) umfasst.

7. Verfahren nach Anspruch 1, **dadurch gekennzeichnet, dass** der Schritt des Ausführens einer Datei-Eingabe-Ausgabe-Operation Folgendes umfasst:
Eingeben einer Datenuntermenge (634, 636, 638) aus einer verschlüsselten, temporären Kopie der Datei (640); und
Entschlüsseln der Datenuntermenge in einer lokalen Funktion, um eine aus der temporären, verschlüsselten Datei gelesene unverschlüsselte Datenuntermenge zu erzeugen (642).

8. Verfahren nach Anspruch 7, welches weiterhin die folgenden Schritte umfasst:
Aktualisieren der digitalen Signatur unter Verwendung der aus der verschlüsselten, temporären Kopie der Datei eingegebenen Datenuntermenge und einer in die Datei zu schreibenden Datenuntermenge (654);
Verschlüsseln der der in die verschlüsselte, temporäre Datei zu schreibenden Datenuntermenge in einer lokalen Funktion (656); und
Schreiben der in die verschlüsselte, temporäre Datei zu schreibenden Datenuntermenge (658).

9. Verfahren nach Anspruch 8, welches weiterhin folgende Schritte umfasst:
Kopieren der digitalen Signatur im Speicher in die verschlüsselte, temporäre Datei (658); und
Kopieren der verschlüsselten, temporären Datei in die Datei (808); und
Schließen der Datei (403, 438, 810).

10. Verfahren nach Anspruch 8, welches weiterhin die Schritte des Authentifizierens der Datei unter Verwendung der digitalen Signatur (754) umfasst.

11. Verfahren nach Anspruch 9, welches weiterhin die Schritte des Authentifizierens der Datei unter Verwendung einer Anwendersignatur (726) umfasst.

12. Maschinenlesbares Medium, welches einen Code für das Veranlassen eines Computers umfasst, die Schritte des Verfahrens gemäß Anspruch 1 auszuführen, wobei eine erste Funktion den Schritt des Anlegens einer Datei und eine zweite Funktion den Dateioperationsschritt ausführt.

13. Maschinenlesbares Medium nach Anspruch 12, **dadurch gekennzeichnet, dass** der Computercode weiterhin eine dritte Funktion für das Öffnen einer Datei umfasst, wobei die dritte Funktion eine Datei mit einer verschlüsselten digitalen Signatur authentifizieren kann.

14. Maschinenlesbares Medium nach Anspruch 13, **dadurch gekennzeichnet, dass** die dritte Funktion weiterhin einen Code für das Anlegen einer temporären, verschlüsselten Datei und das Erzeugen eines Dateistroms daraus umfasst.

15. Maschinenlesbares Medium nach Anspruch 14, **dadurch gekennzeichnet, dass** der Computercode weiterhin einen Code für das Implementieren einer digitalen Signatur unter Verwendung einer symmetrischen, invertierbaren Funktion umfasst.

16. Maschinenlesbares Medium nach Anspruch 15, **dadurch gekennzeichnet, dass** der Computercode weiterhin für Authentifizierungszwecke einen Code für das Implementieren einer Anwendersignatur innerhalb der Datei umfasst.

17. Maschinenlesbares Medium nach Anspruch 16, **dadurch gekennzeichnet, dass** der Computercode weiterhin eine Queilcode-Bibliothek mit Funktionen umfasst, die implementiert werden, damit Verschlüsselung, Entschlüsselung und Authentifizierung für einen Quellcode-Programmierer transparent sind.

18. Maschinenlesbares Medium nach Anspruch 16, **dadurch gekennzeichnet, dass** der Computercode in dem gleichen Adressraum wie eine Anwenderanwendung ausgeführt wird.

19. Maschinenlesbares Medium nach Anspruch 16, **dadurch gekennzeichnet, dass** der Computercode weiterhin eine die ersten und zweiten Funktionen verwendende Datenbank-Bibliothek umfasst.

20. Verfahren nach Anspruch 1, **dadurch gekennzeichnet, dass**:
der Schritt des Anlegens einer Datei weiterhin das Speichern einer Anwendersignatur in der Datei zusammen mit den sensiblen Daten umfasst;
der Schritt des Verschlüsselns der die sensiblen Daten enthaltenden Datei weiterhin die Anwendersignatur umfasst; und
der Dateioperationsschritt weiterhin das Verschlüsseln der Anwendersignatur und das Hinzufügen der verschlüsselten Anwendersignatur zu der Datei zu deren Authentifizieren umfasst.

## Revendications

1. Procédé de gestion de données sensibles, comprenant :
a) une étape de création de fichier (401) comprenant les opérations consistant à :
créer un fichier contenant des données sensibles (404) ;
calculer une signature numérique pour le fichier (408) ;
mémoriser la signature numérique dans le fichier avec les données sensibles ; et
crypter le fichier contenant les données sensibles (412) et la signature numérique pour produire un fichier crypté ; et
b) une étape d'opérations de fichier (402) comprenant l'opération consistant à :
effectuer une opération d'entrée-sortie sur un sous-ensemble approprié du fichier crypté (630) sans nécessité de décrypter le fichier entier ;
l'étape d'opérations de fichier étant **caractérisée en ce qu'**elle comprend les opérations consistant à :
décrypter un sous-ensemble approprié du fichier dans une fonction locale d'une application sécurisée lors de l'exécution d'une opération de lecture (642) ;
décrypter un sous-ensemble approprié du fichier dans une fonction locale d'une application sécurisée lors de l'exécution d'une opération d'écriture (652) ;
mettre à jour la signature numérique du fichier, en utilisant le sous-ensemble approprié décrypté(654) ;
crypter le sous-ensemble approprié à écrire dans le fichier (424) ;
écrire le sous-ensemble approprié crypté dans le fichier ;
crypter la signature numérique (428) ; et
ajouter la signature numérique cryptée au fichier pour l'authentifier (434).

2. Procédé selon la revendication 1, dans lequel l'étape d'exécution d'une opération d'entrée-sortie de fichier sur le fichier comprend en outre les opérations consistant à :
entrer un sous-ensemble de données provenant d'un flux de fichier (634) ; et
décrypter le sous-ensemble de données dans une fonction locale (652).

3. Procédé selon la revendication 2, comprenant en outre l'étape consistant à mettre à jour la signature numérique en utilisant le sous-ensemble de données entré depuis le flux de fichier et un sous-ensemble de données à écrire dans le fichier (744).

4. Procédé selon la revendication 3, comprenant en outre les étapes consistant à :
crypter le sous-ensemble de données à écrire dans le fichier dans une fonction locale pour produire un sous-ensemble de données crypté à écrire (656) ; et
écrire le sous-ensemble de données crypté à écrire dans le fichier (432).

5. Procédé selon la revendication 3, dans lequel l'étape d'exécution de l'opération d'entrée-sortie de fichier sur le fichier comprend en outre le fait d'authentifier le fichier en utilisant la signature numérique (754).

6. Procédé selon la revendication 4, dans lequel l'étape d'exécution de l'opération d'entrée-sortie de fichier sur le fichier comprend en outre le fait d'authentifier le fichier en utilisant une signature d'utilisateur (726).

7. Procédé selon la revendication 1, dans lequel l'étape d'exécution d'une opération d'entrée-sortie de fichier comprend les opérations consistant à :
entrer un sous-ensemble de données (634, 636, 638) à partir d'une copie temporaire cryptée du fichier (640) ; et
décrypter le sous-ensemble de données dans une fonction locale pour produire un sous-ensemble de données non crypté lu dans le fichier temporaire crypté (642).

8. Procédé selon la revendication 7, comprenant en outre les étapes consistant à :
mettre à jour la signature numérique en utilisant le sous-ensemble de données entré depuis la copie temporaire cryptée du fichier et un sous-ensemble de données à écrire dans le fichier (654) ;
crypter le sous-ensemble de données à écrire dans le fichier temporaire crypté dans une fonction locale (656) ; et
écrire le sous-ensemble de données à écrire dans le fichier temporaire crypté (658).

9. Procédé selon la revendication 8, comprenant en outre les étapes consistant à :
copier la signature numérique en mémoire dans le fichier temporaire crypté (658) ; et
copier le fichier temporaire crypté dans le fichier (808) ; et
fermer le fichier (403, 438, 810).

10. Procédé selon la revendication 8, comprenant en outre l'étape consistant à authentifier le fichier en utilisant la signature numérique (754).

11. Procédé selon la revendication 9, comprenant en outre l'étape consistant à authentifier le fichier en utilisant une signature d'utilisateur (726).

12. Support lisible par une machine, comprenant du code destiné à faire exécuter par un ordinateur les étapes du procédé de la revendication 1, dans lequel une première fonction exécute l'étape de création de fichier et une deuxième fonction exécute l'étape d'opérations de fichier.

13. Support lisible par une machine selon la revendication 12, dans lequel le code d'ordinateur comprend en outre une troisième fonction pour ouvrir un fichier, la troisième fonction étant capable d'authentifier un fichier ayant une signature numérique cryptée.

14. Support lisible par une machine selon la revendication 13, dans lequel la troisième fonction comprend en outre du code servant à créer un fichier temporaire crypté et à générer un flux de fichier à partir de celui-ci.

15. Support lisible par une machine selon la revendication 14, dans lequel le code d'ordinateur comprend en outre du code servant à mettre en oeuvre une signature numérique en utilisant une fonction réversible et symétrique.

16. Support lisible par une machine selon la revendication 15, dans lequel le code d'ordinateur comprend en outre du code servant à mettre en oeuvre une signature d'utilisateur à l'intérieur du fichier aux fins d'authentification.

17. Support lisible par une machine selon la revendication 16, dans lequel le code d'ordinateur comprend en outre une bibliothèque en code source de fonctions, mise en oeuvre de manière telle que le cryptage, le décryptage et l'authentification sont transparents pour un programmeur de code source.

18. Support lisible par une machine selon la revendication 16, dans lequel le code d'ordinateur est exécuté dans le même espace d'adresse qu'une application d'utilisateur.

19. Support lisible par une machine selon la revendication 16, dans lequel le code d'ordinateur comprend en outre une bibliothèque de base de données qui utilise lesdites première et deuxième fonctions.

20. Procédé selon la revendication 1, dans lequel :
l'étape de création de fichier comprend en outre le fait de mémoriser une signature d'utilisateur dans le fichier avec les données sensibles ;
l'étape de cryptage du fichier contenant les données sensibles comprend en outre la signature d'utilisateur ; et
l'étape d'opérations de fichier comprend en outre le fait de crypter la signature d'utilisateur et d'ajouter la signature d'utilisateur cryptée au fichier pour l'authentifier.
